# EUROPÄISCHE PATENTANMELDUNG

(11) **EP 3 672 058 A1**
(43) Veröffentlichungstag der Anmeldung: **24.06.2020**
(21) Anmeldenummer: 18213075.7
(22) Anmeldetag: 17.12.2018
(51) Int. Cl.: H02P 3/18, B60L 15/02, B60L 15/04, B60L 15/06, H02P 6/15

(54) **BETREIBEN VON SCHALTELEMENTEN EINES WECHSELRICHTERS EINES MITTELS WENIGSTENS EINER ZUMINDEST DREIPHASIGEN SYNCHRONMASCHINE ANGETRIEBENEN, INSBESONDERE SCHIENENGEBUNDENEN FAHRZEUGS**

(71) Anmelder: Siemens Aktiengesellschaft, 80333 München (DE)
(72) Erfinder: Bergner, Hans, 76187 Karlsruhe (DE); Ditterich, Jürgen, 90427 Nürnberg (DE); Hoke, Karsten, 39218 Schönebeck OT Pretzien (DE); Rüger, Niklas, 90574 Roßtal (DE)

(57) **Zusammenfassung**

Die Erfindung betrifft ein Verfahren zum Betreiben von Schaltelementen (20,22,24,26,28,30) eines Wechselrichters (16,18) eines mittels einer dreiphasigen Synchronmaschine (12,14) angetriebenen Fahrzeugs (10), bei dem der Wechselrichter (16,18) für die Phasen (U1,V1,W1) eine Reihenschaltung aus den Schaltelementen (20,22,24,26,28,30) aufweist, wobei bei einem Abbremsen des Fahrzeugs (10) mittels der Synchronmaschine (12,14) eine Taktrate zum Betreiben der Schaltelemente (20,22,24,26,28,30) abhängig von einer Frequenz von Phasenwechselströmen (iᵤ,iᵥ,i_{w}) der Synchronmaschine (12,14) eingestellt wird, sodass von der Synchronmaschine (12,14) bereitgestellte elektrische Energie dem Gleichspannungszwischenkreis (38) zugeführt wird, wobei Nullstellen der Phasenwechselströme (iᵤ,iᵥ,i_{w}) ermittelt werden und die Schaltelemente (20,22,24,26,28,30) derart betrieben werden, dass zwischen dem jeweiligen der Phasenwechselströme (iᵤ,iᵥ,i_{w}) und einer jeweils zugeordneten Phasenwechselspannung (uᵤ,uᵥ,u_{w}) eine vorgegebene Phasendifferenz eingestellt wird.

## Beschreibung

Die Erfindung betrifft ein Verfahren zum Betreiben von Schaltelementen eines Wechselrichters eines mittels wenigstens einer zumindest dreiphasigen Synchronmaschine angetriebenen, insbesondere schienengebundenen Fahrzeugs, bei dem der Wechselrichter für jede der Phasen der Synchronmaschine wenigstens eine Reihenschaltung aus den Schaltelementen aufweist, um die Synchronmaschine mit einem am Wechselrichter angeschlossenen Gleichspannungszwischenkreis elektrisch zu koppeln, wobei bei einem Abbremsen des Fahrzeugs mittels der Synchronmaschine eine Taktrate zum Betreiben der Schaltelemente abhängig von einer Frequenz von jeweiligen durch die Synchronmaschine bereitgestellten Phasenwechselströmen eingestellt wird, sodass von der Synchronmaschine bereitgestellte elektrische Energie zumindest teilweise dem Gleichspannungszwischenkreis zugeführt wird. Weiterhin betrifft die Erfindung ein Verfahren zum Abbremsen eines mittels wenigstens einer zumindest dreiphasigen Synchronmaschine angetriebenen, insbesondere schienengebundenen Fahrzeugs, bei dem die Synchronmaschine über einen für jede der Phasen der Synchronmaschine wenigstens eine Reihenschaltung aus den Schaltelementen aufweisenden Wechselrichter mit einem an den Wechselrichter angeschlossenen Gleichspannungszwischenkreis elektrisch gekoppelt wird, mit den Schritten: Vorgeben einer Bremsleistung zum Abbremsen des Fahrzeugs, Einstellen einer Taktrate zum Betreiben der Schaltelemente abhängig von einer Frequenz von jeweiligen durch die Synchronmaschine bereitgestellten Phasenwechselströmen beim Abbremsen des Fahrzeugs mittels der Synchronmaschine, sodass von der Synchronmaschine bereitgestellte elektrische Energie dem Gleichspannungszwischenkreis zugeführt wird, und Umwandeln von der beim Abbremsen mittels der Synchronmaschine von dieser dem Gleichspannungszwischenkreis zugeführten elektrischen Energie in Wärme mittels einer am Gleichspannungszwischenkreis angeschlossenen elektrischen Widerstandseinheit. Weiterhin betrifft die Erfindung einen Taktgeber zum Betreiben von Schaltelementen eines Wechselrichters eines mittels wenigstens einer zumindest dreiphasigen Synchronmaschine antreibbaren, insbesondere schienengebundenen Fahrzeugs, bei dem der Wechselrichter für jede der Phasen der wenigstens einen Synchronmaschine wenigstens eine Reihenschaltung aus den Schaltelementen aufweist, um die wenigstens eine Synchronmaschine mit einem am Wechselrichter angeschlossenen Gleichspannungszwischenkreis elektrisch zu koppeln, wobei der Taktgeber ausgebildet ist, bei einem Abbremsen des Fahrzeugs mittels der Synchronmaschine eine Taktrate zum Betreiben der Schaltelemente abhängig von einer Frequenz von jeweiligen durch die Synchronmaschine bereitgestellten Phasenwechselströmen einzustellen, um von der Synchronmaschine bereitgestellte elektrische Energie zumindest teilweise dem Gleichspannungszwischenkreis zuzuführen. Schließlich betrifft die Erfindung auch ein elektrisch antreibbares, insbesondere schienengebundenes Fahrzeug mit wenigstens einer zumindest dreiphasigen Synchronmaschine zum Antreiben des Fahrzeugs in einem Fahrbetrieb, wenigstens einem Gleichspannungszwischenkreis, wenigstens einem am wenigstens einen Gleichspannungszwischenkreis angeschlossenen Wechselrichter, der für jede der Phasen der wenigstens einen Synchronmaschine wenigstens eine Reihenschaltung aus Schaltelementen zum Anschließen an eine jeweilige der Phasen der wenigstens einen Synchronmaschine aufweist, um die wenigstens eine Synchronmaschine mit dem wenigstens einen Gleichspannungszwischenkreis elektrisch zu koppeln, einer am wenigstens einen Gleichspannungszwischenkreis angeschlossenen elektrischen Widerstandseinheit, die ausgebildet ist, zumindest bei einem Abbremsen des Fahrzeugs mittels der Synchronmaschine von dieser dem Gleichspannungszwischenkreis zugeführte elektrische Energie in Wärme umzuwandeln, und einem Taktgeber zum Betreiben der Schaltelemente des wenigstens einen Wechselrichters, wobei der Taktgeber ausgebildet ist, zum Abbremsen des Fahrzeugs mittels der wenigstens einen Synchronmaschine eine Taktrate zum Betreiben der Schaltelemente abhängig von einer Frequenz von jeweiligen durch die wenigstens eine Synchronmaschine bereitgestellten Phasenwechselströmen einzustellen, um die von der wenigstens einen Synchronmaschine bereitgestellte elektrische Energie zumindest teilweise dem wenigstens einen Gleichspannungszwischenkreis zuzuführen.

Taktgeber, elektrisch antreibbare, insbesondere schienengebundene Fahrzeuge, Verfahren zum Betreiben von Schaltelementen eines Wechselrichters sowie auch Verfahren zum Abbremsen von insbesondere schienengebundenen Fahrzeugen mittels einer dreiphasigen Synchronmaschine sind im Stand der Technik dem Grunde nach umfänglich bekannt, sodass es einen gesonderten druckschriftlichen Nachweises hierfür nicht bedarf. Taktgeber der gattungsgemäßen Art dienen dazu die Schaltelemente des Wechselrichters in vorgebbarer Weise im Schaltbetrieb zu betreiben, sodass mittels des Wechselrichters eine gewünschte Energiewandlungsfunktion realisiert werden kann. Derartige Wechselrichter finden mittlerweile in vielfältiger Weise Einsatz, beispielsweise auch bei Fahrzeugen, die elektrisch antreibbar sind, indem eine an den Gleichspannungszwischenkreis angeschlossene elektrische Energiequelle elektrische Energie bereitstellt, die unter Nutzung des Wechselrichters in vorgebbarer Weise für eine Antriebsfunktion des Fahrzeugs für die Synchronmaschine bereitgestellt wird.

Die Nutzung elektrischer Antriebseinrichtungen, insbesondere bei schienengebundenen Fahrzeugen, die in der Regel die wenigstens eine Synchronmaschine und den Wechselrichter umfassen, hat sich im Stand der Technik für die gewöhnliche Antriebsfunktionalität, das heißt, ein Beschleunigen des Fahrzeugs beziehungsweise ein Bremsen des Fahrzeugs oder dergleichen bewährt. So ist es zum Beispiel möglich, die elektrische Antriebseinrichtung des Fahrzeugs mittels einer fahrzeugeigenen Energiequelle, beispielsweise einem Akkumulator oder dergleichen, mit elektrischer Energie für den bestimmungsgemäßen Fahrbetrieb des Fahrzeugs zu versorgen. Besonders bei schienengebundenen Fahrzeugen ist es jedoch verbreiteter, eine oberhalb von zwei im Wesentlichen parallel angeordneten Schienen eines Gleises angeordnete Oberleitung zu nutzen, die der Zuführung von elektrischer Energie bei schienengebundenen Fahrzeugen dient. Dem Grunde nach kann eine ähnliche Konstruktion natürlich auch für elektrisch antreibbare Kraftfahrzeuge vorgesehen sein, die nicht schienengebunden sind. Dabei ist ein Gleis ein Fahrweg für das schienengebundene Fahrzeug, wodurch eine Führung des Fahrzeugs entlang des Gleises erreicht wird.

Die Nutzung insbesondere von Taktgebern beziehungsweise gattungsgemäßen Verfahren ist jedoch nicht auf die Nutzung bei elektrisch antreibbaren Fahrzeugen beschränkt. Es kann darüber hinaus auch ein vielfältiger Einsatz bei elektrisch antreibbaren Kraftfahrzeugen, die nicht schienengebunden sind, bei elektrischen Antriebssträngen, insbesondere bei Fertigungsanlagen, Herstellungsprozessen von Gütern und/oder dergleichen vorgesehen sein.

Zum Zwecke des Antreibens des Fahrzeugs wird häufig eine Synchronmaschine genutzt, die in der Regel dreiphasig ausgebildet ist. Je nach Anwendung kann jedoch auch vorgesehen sein, dass die Synchronmaschine mehr als drei Phasen aufweist, beispielsweise vier Phasen, fünf Phasen oder dergleichen. Der Wechselrichter, an dessen Reihenschaltungen aus den Schaltelementen die Phasen der Synchronmaschine angeschlossen sind, ist entsprechend angepasst ausgebildet.

Für die bestimmungsgemäße Antriebsfunktion bezieht der Wechselrichter die elektrische Energie aus der Energiequelle und stellt diese in geeigneter Form für die Synchronmaschine zur Verfügung, sodass die gewünschte Antriebsfunktion erreicht werden kann. Die Antriebsfunktion kann zum Beispiel ein Beschleunigen des Fahrzeugs, ein Bremsen des Fahrzeugs, ein Einstellen einer bestimmten Geschwindigkeit und/oder dergleichen sein.

Ein Wechselrichter ist eine Form eines Energiewandlers, der einen Gleichspannungszwischenkreis mit einem Wechselspannungsnetz energietechnisch koppelt, sodass zwischen dem Wechselspannungsnetz und dem Gleichspannungszwischenkreis elektrische Energie ausgetauscht werden kann. Zu diesem Zweck ist in der Regel vorgesehen, dass für eine jeweilige Phase des Wechselspannungsnetzes eine Reihenschaltung aus wenigstens zwei Schaltelementen vorgesehen ist, die mit dem Gleichspannungszwischenkreis elektrisch gekoppelt ist. An Mittelabgriffen der Reihenschaltungen kann die jeweilige Phase des Wechselspannungsnetzes angeschlossen werden. Im Falle der Kopplung des Gleichspannungszwischenkreises über den Wechselrichter mit der Synchronmaschine sind jeweilige Phasenanschlüsse der Synchronmaschine, kurz Phasen genannt, an die jeweiligen Mittelabgriffe der Reihenschaltungen angeschlossen. Durch Steuern der Schaltelemente durch den Taktgeber kann die gewünschte Wandlungsfunktion des Wechselrichters erreicht werden, sodass die gewünschte Antriebsfunktion der Synchronmaschine erreicht werden kann. Zu diesem Zweck werden die Schaltelemente gewöhnlich mit einer vorgegebenen Taktrate betrieben, die erheblich größer als eine Frequenz von Phasenwechselströmen der Synchronmaschine ist. Mittels bestimmter Steuerungsverfahren wie Pulsweitenmodulation (PWM) oder dergleichen kann dann die gewünschte energietechnische Kopplung hergestellt werden. Zu diesem Zweck stellt der Taktgenerator für vorzugsweise jedes der Schaltelemente des Wechselrichters spezifische Schaltsignale bereit, sodass die Schaltelemente im Schaltbetrieb in gewünschter Weise betrieben werden können.

Durch geeignete Impulsmuster der Schaltsignale für die Schaltelemente, die von dem Taktgeber bereitgestellt werden, kann somit ein Beschleunigen, ein Bremsen des Fahrzeugs oder dergleichen erreicht werden. Bei einem Bremsen des Fahrzeugs kann die durch die Synchronmaschine bereitgestellte elektrische Energie dem Zwischenkreis zugeführt werden, wo sie dann beispielsweise in ein angeschlossenes Energieversorgungsnetz beziehungsweise einen angeschlossenen Energiespeicher gefördert wird oder gegebenenfalls auch zusätzlich einem Bremswiderstand zugeführt wird, um die Energie zumindest teilweise in Wärme umzuwandeln.

Aus Gründen der Betriebssicherheit, insbesondere während des bestimmungsgemäßen Fahrbetriebs, weisen elektrisch antreibbare Fahrzeuge in der Regel auch wenigstens eine mechanische Bremseinrichtung auf, die beispielsweise als Reibungsbremse oder dergleichen ausgebildet sein kann. Diese Bremseinrichtung ist unter anderem auch deshalb erforderlich, um sicherzustellen, dass das Fahrzeug bei einem Ausfall der elektrischen Energieversorgung beziehungsweise der elektrischen Energiesenke beim Bremsen sicher abgebremst werden kann beziehungsweise sicher angehalten werden kann. Die mechanische Bremseinrichtung ist deshalb entsprechend zu konstruieren. Tatsächlich erweisen sich die elektrischen Antriebseinrichtungen mittlerweile als derart zuverlässig, dass die mechanische Bremseinrichtung in der Regel nur noch zum Feststellen des Fahrzeugs im Stillstand benötigt wird. Die mechanische Bremseinrichtung wird lediglich in einem Schnellbremsfall oder auch einem Notbremsfall benötigt.

Aus Gründen der Betriebssicherheit ist heutzutage vorgesehen, dass die mechanische Bremseinrichtung nicht nur eine einfache und überschaubare Konstruktion besitzt, sondern dass deren Wirkungsweise auch auf einfache Weise nachvollziehbar ist. Gerade für den Schnellbremsfall oder auch den Notbremsfall muss die Zuverlässigkeit des sicheren Abbremsens nachgewiesen werden können. Durch die einfache und überschaubare Konstruktion kann dies realisiert werden. Mit elektrischen Antriebseinrichtungen des Stands der Technik ist dies sehr aufwendig zu realisieren, unter Umständen sogar nicht möglich. Die mechanische Bremseinrichtung ist daher auch weiterhin bei insbesondere schienengebundenen Fahrzeugen erforderlich.

Darüber hinaus erweist es sich als nachteilig, dass die mechanische Bremseinrichtung regelmäßig gewartet werden muss. Insbesondere wenn die mechanische Bremseinrichtung für die Betriebssicherheit nicht abkömmlich ist, kann deren Wartung sehr aufwendig sein.

Dem Grunde nach könnte jedoch auch die elektrische Antriebseinrichtung beziehungsweise die mittels des Wechselrichters angetriebene Synchronmaschine zum zuverlässigen Abbremsen des Fahrzeugs genutzt werden. Die Steuerung der Schaltelemente durch den Taktgeber erlaubt es, mittels der durch den Wechselrichter und der daran angeschlossenen Synchronmaschine eine hochflexible Einstellung von Bremsleistungen und infolgedessen auch von Bremsmomenten zu erreichen. Jedoch erweist es sich als nachteilig, dass die Steuerung des Wechselrichters durch den Taktgeber aufgrund vieler die Schaltsignale beeinflussender Steuergrößen sowie interner Signalverarbeitungsprozesse sehr komplex ist. Aus diesem Grund ist ein Nachweis für eine große fehlerfreie Zuverlässigkeit bei der Schnellbremsung beziehungsweise der Notbremsung des Fahrzeugs nur sehr schwer zu erbringen. Aus diesem Grund wird die elektrische Antriebseinrichtung des Fahrzeugs in der Regel nur als Betriebsantriebseinrichtung genutzt, die durch die mechanische Bremseinrichtung ergänzt ist. In diesem Sinne offenbart die DE 101 60 612 A1 einen Traktionsantrieb mit einem Traktionsstromrichter und einer permanent erregten Synchronmaschine. Ferner offenbart die US 2012/0043817 A1 ein Antriebssystem für eine Anwendung mit einem isolierten Wechselspannungsnetz.

Aus der WO 2016/107707 A1 ist eine elektrische Bremse für eine Synchronmaschine bekannt. Zu diesem Zweck lehrt die WO 2016/107707 A1, dass die Synchronmaschine an eine Phasenumschalteinrichtung angeschlossen ist, mittels der die Phasen der Synchronmaschine in einem ersten Schaltzustand kurzgeschlossen und in einem zweiten Schaltzustand an jeweilige elektrische Widerstände angeschlossen werden können. Durch ein Tastverhältnis zwischen diesen beiden Betriebszuständen der Phasenumschalteinrichtung kann eine Widerstandskennlinie eingestellt werden, sodass sich hieraus eine einstellbare Bremsleistung und infolgedessen auch ein entsprechend einstellbares Bremsmoment ergibt.

Auch wenn sich diese Lehre bewährt hat, bleibt weiterhin Verbesserungsbedarf. Die Lehre der WO 2016/107707 A1 eignet sich nämlich nur sehr begrenzt für den Schnellbremsfall beziehungsweise den Notbremsfall. Darüber hinaus ist zu bedenken, dass die mechanische Bremseinrichtung im Fahrzeug unter Umständen nicht immer ausreicht, um eine sichere Bremswirkung für den Schnellbremsfall beziehungsweise den Notbremsfall erreichen zu können. Als nachteilig erweist es sich insbesondere, dass der einstellbare Bereich für die Bremsleistung beziehungsweise das Bremsmoment begrenzt ist. Darüber hinaus eignet sich die Lehre der WO 2016/107707 A1 lediglich für die Anwendung bei einer einzelnen elektrischen Maschine.

Der Erfindung liegt die Aufgabe zugrunde, eine elektrische Antriebseinrichtung, die eine über einen Wechselrichter an einen Gleichspannungszwischenkreis angeschlossenen Synchronmaschine umfasst, dahingehend weiterzubilden, dass die Bremsleistung beziehungsweise das Bremsmoment zum Abbremsen in hochflexibler und einfacher Weise eingestellt werden kann. Vorzugsweise soll auch ein Betrieb mehrerer elektrischer Maschinen an einem gemeinsamen Gleichspannungszwischenkreis möglich sein.

Als Lösung werden mit der Erfindung Verfahren, ein Taktgeber sowie ein elektrisch antreibbares Fahrzeug gemäß den unabhängigen Ansprüchen vorgeschlagen.

Vorteilhafte Weiterbildungen ergeben sich durch Merkmale der abhängigen Ansprüche.

Bezüglich eines gattungsgemäßen Verfahrens zum Betreiben von Schaltelementen eines Wechselrichters wird insbesondere vorgeschlagen, dass Nullstellen beziehungsweise Nulldurchgänge der Phasenwechselströme ermittelt werden und die Schaltelemente derart betrieben werden, dass zwischen dem jeweiligen der Phasenwechselströme und einer jeweils zugeordneten Phasenwechselspannung eine vorgegebene Phasendifferenz eingestellt wird.

Bezüglich eines Verfahrens zum Abbremsen eines mittels wenigstens einer zumindest dreiphasigen Synchronmaschine angetriebenen Fahrzeugs wird insbesondere vorgeschlagen, dass die Schaltelemente gemäß dem erfindungsgemäßen Verfahren betrieben werden, wobei eine Phasendifferenz zwischen dem jeweiligen der Phasenwechselströme und einer jeweils zugeordneten Phasenwechselspannung abhängig von einer Bremsleistung eingestellt wird.

Bezüglich eines gattungsgemäßen Taktgebers wird insbesondere vorgeschlagen, dass der Taktgeber ausgebildet ist, Nullstellen der Phasenwechselströme zu ermitteln und die Schaltelemente derart zu betreiben, dass zwischen dem jeweiligen der Phasenwechselströme und einer jeweils zugeordneten Phasenwechselspannung eine vorgegebene Phasendifferenz eingestellt ist.

Bezüglich eines gattungsgemäß elektrisch antreibbaren Fahrzeugs wird insbesondere vorgeschlagen, dass der Taktgeber gemäß der Erfindung ausgebildet ist und weiterhin ausgebildet ist, eine Phasendifferenz zwischen dem jeweiligen der Phasenwechselströme und einer jeweils zugeordneten Phasenwechselspannung abhängig von einer vorgebbaren Bremsleistung einzustellen.

Die Erfindung basiert auf dem Gedanken, dass mittels der wenigstens den wenigstens einen Wechselrichter und die wenigstens eine Synchronmaschine umfassenden Antriebseinrichtung in Verbindung mit der Widerstandseinheit ein Abbremsen des Fahrzeugs auch für den Schnellbremsfall beziehungsweise Notbremsfall erreicht werden kann. Der Wechselrichter und die Widerstandseinheit sind hierbei über den Gleichspannungszwischenkreis miteinander elektrisch gekoppelt. Alternativ oder ergänzend kann zur Widerstandseinheit natürlich auch eine entsprechend geeignete Energiespeichereinheit vorgesehen sein, die ausgebildet ist, die während des Abbremsens des Fahrzeugs anfallende elektrische Energie aufzunehmen und zu speichern. In der Regel ist es jedoch zweckmäßiger, an dieser Stelle die Widerstandseinheit zu nutzen, zumal große Energiemengen während eines kleinen Zeitraums anfallen.

Während der Bereitstellung der Bremsleistung beziehungsweise des Bremsmoments durch die wenigstens eine Synchronmaschine ist es in der Regel vorgesehen, die elektrische Energiequelle für den bestimmungsgemäßen Fahrbetrieb des Fahrzeugs während des Abbremsens des Fahrzeugs vom Gleichspannungszwischenkreis elektrisch zu trennen. Dadurch besteht die Möglichkeit, ungünstige Einwirkungen der elektrischen Energiequelle, beispielsweise eines Energieversorgungsnetzes oder dergleichen zu vermeiden, die gegebenenfalls das Abbremsen stören könnten. Bei einem schienengebundenen Fahrzeug, welches in der Regel mit elektrischer Energie über eine Oberleitung aus einem Energieversorgungsnetz versorgt wird und das zum Koppeln der Oberleitung mit dem Gleichspannungszwischenkreis einen Netzwechselrichter oder einen Gleichrichter umfasst, sind zumindest während des Abbremsens diese Einheiten vom Gleichspannungszwischenkreis elektrisch getrennt. Dies kann mittels eines Schaltelements, beispielsweise einem Schütz oder dergleichen realisiert werden.

Durch das Betreiben der Schaltelemente mit einer Taktrate, die zumindest während des Abbremsens von den durch die wenigstens eine Synchronmaschine bereitgestellten Phasenwechselströmen abhängig ist, insbesondere wenn sie dieser entspricht, kann die von der wenigstens einen Synchronmaschine abgegebene elektrische Leistung beeinflusst werden. Das Beeinflussen kann dadurch erreicht werden, dass zwischen dem jeweiligen der Phasenwechselströme der wenigstens einen Synchronmaschine und der jeweils zugeordneten Phasenwechselspannung eine Phasendifferenz eingestellt wird, die von der Bremsleistung abhängig ist. Dadurch ist es möglich, eine Reduktion oder auch eine Vergrößerung der von der wenigstens einen Synchronmaschine abgegebenen elektrischen Leistung entsprechend der vorgegebenen Bremsleistung einstellen zu können, was beim Stand der Technik durch Gleichrichten der von der wenigstens einen Synchronmaschine bereitgestellten Phasenwechselströme nicht oder nur sehr begrenzt möglich ist. Mit der Erfindung kann also die Flexibilität in Bezug auf die Bremsleistung beziehungsweise das Bremsmoment erheblich verbessert werden.

Dabei nutzt die Erfindung den Gedanken, dass die Phasenwechselspannungen der wenigstens einen Synchronmaschine hinsichtlich des Werts ihrer Amplitude beeinflusst werden können, sodass hiervon abhängig auch die Zwischenkreisspannung bedarfsweise variieren kann. Dies erlaubt es, mit der Widerstandseinheit auch in hochflexibler Weise die durch die wenigstens eine Synchronmaschine dem Gleichspannungszwischenkreis zugeführte Leistung in geeigneter Weise in Wärme umzuwandeln. Bezüglich der Leistungswandlung in Wärme kann mit der Erfindung also der einstellbare Bereich erheblich vergrößert werden, sodass die Nutzung insbesondere für den Schnellbremsfall beziehungsweise den Notbremsfall erreicht werden kann.

Zugleich ermöglicht es die Erfindung, durch Vorgabe der Bremsleistung beziehungsweise des Bremsmoments den Notbremsfall beziehungsweise den Schnellbremsfall erheblich zu verbessern, weil nämlich eine maximale Bremswirkung bezüglich des Fahrzeugs erreicht werden kann, wobei zugleich unter Nutzung einer entsprechenden Anti-Schlupf-Regelung ein besonders schnell wirkendes und zuverlässiges Abbremsen des Fahrzeugs bei unterschiedlichsten Randbedingungen in Bezug auf eine mechanische Kopplung zwischen Rädern des Fahrzeugs und einem Fahrweg erreicht werden kann. Darüber hinaus kann mit der Erfindung auch auf einfache Weise auf eine Anpassung einer maximal möglichen Bremsleistung beziehungsweise eines maximal möglichen Bremsmoments reagiert werden, indem die maximal mögliche Bremsleistung beziehungsweise das maximal mögliche Bremsmoment als vorgegebene Bremsleistung beziehungsweise vorgegebenes Bremsmoment während des Abbremsens in geeigneter Weise angepasst wird. Für den Schnellbremsfall beziehungsweise den Notbremsfall kann hierdurch ein besonders schnelles Abbremsen über einen sehr kurzen Weg erreicht werden.

Anders als bei der WO 2016/107707 A1 kann also mit der Erfindung auch eine Bremsleistung beziehungsweise ein Bremsmoment realisiert werden, welches deutlich größer als die Bremsleistung beziehungsweise das Bremsmoment ist, welches mit der WO 2016/107707 A1 erreichbar ist. Dabei erlaubt es die Erfindung, dies mit einem lediglich geringen Steuerungsaufwand erreichen zu können. Erst hierdurch eignet sich die bereits im Fahrzeug vorhandene elektrische Antriebseinrichtung dafür, bei einem Notbremsfall beziehungsweise bei einem Schnellbremsfall eingesetzt werden zu können.

Die Erfindung richtet sich also nicht auf den gewöhnlichen bestimmungsgemäßen Fahrbetrieb, bei dem ein Beschleunigen, ein Bremsen des Fahrzeugs oder ein Betreiben des Fahrzeugs bei einer vorgegebenen Geschwindigkeit vorgesehen ist, sondern sie bezieht sich insbesondere darauf, eine Schnellbremsung beziehungsweise eine Notbremsung des Fahrzeugs zu ermöglichen, und zwar vorzugsweise unter weitgehender Vermeidung der im Stand der Technik üblichen mechanischen Bremseinrichtung. Dies erlaubt es, die mechanische Bremseinrichtung zu reduzieren oder sogar einzusparen.

Ein Schaltelement im Sinne dieser Offenbarung ist dabei vorzugsweise ein steuerbares elektronisches Schaltelement, beispielsweise ein steuerbarer elektronischer Halbleiterschalter wie ein Transistor, der in einem Schaltbetrieb betrieben wird, ein Thyristor, Kombinationsschaltungen hiervon, vorzugsweise mit parallelgeschalteten Inversdioden, ein Gate-Turn-Off-Thyristor (GTO), ein Insulated-Gate-BipolarTransistor (IGBT), Kombinationen hiervon oder dergleichen. Dem Grunde nach kann das Schaltelement jedoch auch durch einen Feldeffekttransistor, insbesondere eine Metaloxide-Semiconductor-Field-Effect-Transistor (MOSFET) gebildet sein.

Zur Bereitstellung der gewünschten Energiewandlungsfunktionalität durch den Wechselrichter werden die Schaltelemente im Schaltbetrieb betrieben. In Bezug auf einen Halbleiterschalter unter Nutzung eines Transistors bedeutet der Schaltbetrieb, dass in einem eingeschalteten Schaltzustand zwischen den eine Schaltstrecke bildenden Anschlüssen des Transistors ein sehr kleiner elektrischer Widerstand bereitgestellt wird, sodass ein hoher Stromfluss bei sehr kleiner Restspannung möglich ist. In einem ausgeschalteten Schaltzustand ist hingegen die Schaltstrecke des Transistors hochohmig, das heißt, sie stellt einen hohen elektrischen Widerstand bereit, sodass auch bei hoher, an der Schaltstrecke anliegender elektrischer Spannung im Wesentlichen kein oder nur ein sehr geringer, insbesondere vernachlässigbarer, Stromfluss vorliegt. Hiervon unterscheidet sich ein Linearbetrieb bei Transistoren, der aber bei Wechselrichtern der gattungsgemäßen Art in der Regel nicht zum Einsatz kommt.

Die Schaltelemente weisen zur Realisierung der Steuerfunktionalität jeweils wenigstens einen Steueranschluss auf, an dem sie mit den von dem Taktgeber bereitgestellten Schaltsignalen beaufschlagbar sind, sodass die gewünschte Schaltfunktion des Schaltelements realisiert werden kann. Das Schaltsignal kann ein binäres Schaltsignal sein, welches zwei Zustandswerte einnehmen kann, um die gewünschten Schaltfunktionen des Schaltelements bereitstellen zu können. Beispielsweise kann das Schaltsignal durch eine Impulsfolge gebildet sein, mittels der der Steueranschluss beaufschlagt wird. Dies ist vor allem bei Thyristoren und GTO zweckmäßig. Darüber hinaus kann bei Transistoren vorgesehen sein, dass das Schaltsignal ein Rechtecksignal ist, wobei ein jeweiliger Schaltzustand des Schaltelements einem der Potentiale des Rechtecksignals zugeordnet werden kann. Ein solches Signal ist beispielsweise für Transistoren, insbesondere für bipolare Transistoren, Feldeffekttransistoren oder dergleichen zweckmäßig.

Der Taktgeber stellt die Funktionalität zum Erzeugen der Schaltsignale bereit. Auch weitere Funktionen, insbesondere in Bezug auf den Wechselrichter können durch den Taktgeber realisiert sein, beispielsweise Überwachungsfunktionen, Sicherheitsfunktionen und/oder dergleichen. Zu diesem Zweck kann der Taktgeber eine Hardwareschaltung und/oder eine programmgesteuerte Rechnereinheit oder dergleichen umfassen. Natürlich kann der Taktgeber als eine separate Baugruppe ausgebildet sein. Der Taktgeber kann jedoch auch zumindest teilweise von einer übergeordneten Fahrzeugsteuerung des Fahrzeugs umfasst sein.

Der wenigstens eine Wechselrichter ist eine elektronische Hardwareschaltung, die entsprechend der Anzahl der Phasen der wenigstens einen Synchronmaschine die Reihenschaltungen aus vorzugsweise jeweils zwei Schaltelementen aufweist. Die Reihenschaltungen sind in der Regel parallelgeschaltet an den wenigstens einen Gleichspannungszwischenkreis angeschlossen. In alternativen Ausgestaltungen kann jedoch auch vorgesehen sein, dass einige der Reihenschaltungen auch an separate Gleichspannungszwischenkreise angeschlossen sind. Jeweilige Mittelabgriffe der Reihenschaltungen stellen Anschlüsse bereit, an die jeweilige Phasenanschlüsse der Phasen der wenigstens einen Synchronmaschine angeschlossen werden können. Durch geeignete Impulsmuster der Schaltsignale zum Schalten der Schaltelemente kann die gewünschte energietechnische Kopplung zwischen dem Gleichspannungszwischenkreis und der wenigstens einen Synchronmaschine erreicht werden. Die grundlegenden diesbezüglichen Betriebsverfahren sind dabei bekannt, weshalb diesbezüglich hierzu nicht weiter ausgeführt wird. Für den bestimmungsgemäßen Fahrbetrieb ist in der Regel die Taktrate der Schaltsignale erheblich größer als die Frequenz der Phasenwechselströme der wenigstens einen Synchronmaschine. Erfolgt ein Abbremsen gemäß der Erfindung, wird die Taktrate möglichst unverzüglich geändert, sodass die Taktrate vorzugsweise im Wesentlichen der Frequenz der Phasenwechselströme der wenigstens einen Synchronmaschine entspricht.

Die Synchronmaschine ist eine elektrische Maschine, die vorliegend zumindest für einen dreiphasigen Betrieb ausgelegt ist. Bei bestimmten Anwendungen kann jedoch auch vorgesehen sein, dass die Synchronmaschine mehr als drei Phasen aufweist. Die Synchronmaschine ist vorzugsweise eine permanenterregte Synchronmaschine. Sie kann jedoch auch als fremderregte Synchronmaschine oder dergleichen ausgebildet sein. Natürlich können auch Kombinationen hiervon vorgesehen sein, um beispielsweise bestimmte Steuerungsmöglichkeiten realisieren zu können, die eine Beeinflussung des magnetischen Flusses wünschen lassen.

Das Fahrzeug kann als schienengebundenes Fahrzeug ausgebildet sein oder auch als Kraftfahrzeug. Vorzugsweise umfasst das Fahrzeug eine elektrische Antriebseinrichtung, die zumindest eine Synchronmaschine aufweist. Sind mehrere Synchronmaschinen vorgesehen, ist vorzugsweise für jede der Synchronmaschinen ein eigener Wechselrichter vorgesehen. Darüber hinaus können für die Synchronmaschinen auch eigene Gleichspannungszwischenkreise vorgesehen sein. Weiterhin kann vorgesehen sein, dass die Wechselrichter bei mehreren Synchronmaschinen an einem gemeinsamen Gleichspannungszwischenkreis angeschlossen sind.

Die Taktrate entspricht einer Frequenz, mit der die Schaltsignale für die Schaltelemente durch den Taktgeber bereitgestellt werden. Dabei kann vorgesehen sein, dass ein Impuls für das Steuern eines einzelnen Schaltelements synchronisiert mit der Taktrate einen Einschaltzeitraum und einen Ausschaltzeitraum für das Schaltelement bereitstellt. Für das Abbremsen des Fahrzeugs ist deshalb vorzugsweise vorgesehen, dass die Taktrate vorzugsweise der Frequenz der durch die wenigstens eine Synchronmaschine bereitgestellten Phasenwechselströme entspricht. Für den Betrieb des Abbremsens braucht die Taktrate deshalb auch keine konstante Frequenz aufzuweisen, sondern sie ist vorzugsweise unmittelbar abhängig von der Frequenz der Phasenwechselströme der wenigstens einen Synchronmaschine. Daraus ergibt sich, dass die Taktrate insbesondere natürlich auch von einer momentanen Drehzahl einer Läuferwelle der wenigstens einen Synchronmaschine abhängig sein kann.

Um die Nullstellen der Phasenwechselströme ermitteln zu können, sind beispielsweise Stromsensoren vorgesehen, die an den Taktgeber oder einer daran angeschlossenen übergeordneten Steuerung angeschlossen sind. Durch geeignetes Auswerten der Sensorsignale der Stromsensoren können dann die Nullstellen der entsprechenden Phasenwechselströme ermittelt werden.

Die Phasendifferenz entspricht einem Zeitraum, der zwischen einer Nullstelle des Phasenwechselstroms und einer Nullstelle der Phasenwechselspannung auftritt. Da es sich in der Regel bei drei- beziehungsweise mehrphasigen Netzen um zeitlich äquidistant beabstandete Wechselströme handelt, kann der Zeitraum in der Regel als Winkel angegeben werden, der für alle Phasen gleich groß ist. Die Phasendifferenz entspricht somit einem Winkel zwischen den jeweiligen der Phasenwechselströme und den jeweils zugeordneten der Phasenwechselspannungen.

Um nun die Phasendifferenz einzustellen, werden die Schaltelemente entsprechend zeitlich versetzt zu den ermittelten Nullstellen der Phasenwechselströme gesteuert. Dadurch ist es möglich, die jeweilige der Phasenwechselspannungen so zu steuern, dass deren Nullstellen um einen vorgegebenen Winkel beziehungsweise Zeitraum, nämlich der Phasendifferenz, vor der Nullstelle des jeweiligen Phasenwechselstroms oder auch danach liegt. Die Phasenverschiebung ist also entweder positiv oder negativ in Bezug auf die Phasenwechselströme. Um eine Vergrößerung der Bremsleistung erreichen zu können, ist eine nacheilende Phasenwechselspannung einzustellen, das heißt, die Phasendifferenz ist negativ. Ist hingegen eine Reduktion der Bremsleistung gewünscht, ist eine voreilende Phasenwechselspannung einzustellen, sodass eine positive Phasendifferenz eingestellt ist.

Hieraus ist ersichtlich, wie auf einfache Weise die Leistung während des Abbremsens, das heißt, die Bremsleistung, und damit auch das Bremsmoment eingestellt werden kann. Dabei erweist es sich als vorteilhaft, dass zur Durchführung des Abbremsens eine komplexe Regelung beziehungsweise Steuerung dem Grunde nach nicht erforderlich ist. Dadurch können auch Anforderungen hinsichtlich der Betriebssicherheit auf einfache Weise realisiert und/oder nachgewiesen werden. Mit der Erfindung ist es also möglich, ohne eine mechanische Bremseinrichtung eine zuverlässige sichere Schnellbremsung beziehungsweise Notbremsung erreichen zu können.

Um einen möglichst weiten zuverlässigen Einstellbereich für die Nutzung gemäß der Erfindung erreichen zu können, ist es ferner vorteilhaft, wenn der Gleichspannungszwischenkreis mit keiner weiteren Energiequelle elektrisch gekoppelt ist. Bei einem schienengebundenen Fahrzeug kann die Energiequelle zum Beispiel eine Energiezuführung mittels einer Oberleitung oder dergleichen umfassen. Die Energiequelle kann jedoch auch einen elektrischen Energiespeicher, beispielsweise einen Akkumulator oder dergleichen umfassen, der zum Beispiel am Fahrzeug angeordnet ist. Die Energiequelle wird vorzugsweise vom Gleichspannungszwischenkreis entkoppelt, indem sie zum Beispiel mittels einer Schalteinrichtung vom Gleichspannungszwischenkreis elektrisch getrennt wird. Die Schalteinheit kann durch ein Schütz oder dergleichen gebildet sein. Eine Zwischenkreisgleichspannung des Gleichspannungszwischenkreises ist somit nicht mehr von der Energiequelle abhängig, insbesondere durch die Energiequelle nicht mehr stimmt und kann daher für das Abbremsen bedarfsgerecht eingestellt werden. Dadurch besteht die Möglichkeit, die Zwischenkreisgleichspannung am Gleichspannungszwischenkreis optimiert für das Abbremsen einzustellen, sodass die gewünschte Leistungsumsetzung und infolgedessen auch die gewünschte Energiesenke in hochflexibler Weise realisiert sein kann.

Gemäß einer vorteilhaften Weiterbildung wird vorgeschlagen, dass zumindest zeitweise nur die mit einem jeweiligen von zwei Zwischenkreispotentialen des Gleichspannungszwischenkreises unmittelbar gekoppelten Schaltelemente aktiviert werden. Hierdurch kann erreicht werden, dass nur die Schaltelemente der jeweiligen Reihenschaltungen des wenigstens einen Wechselrichters aktiviert werden, die mit dem gleichen Zwischenkreispotential elektrisch unmittelbar gekoppelt sind. Dies kann dazu dienen, die Phasen der wenigstens einen Synchronmaschine für diesen Zeitraum kurzschließen zu können. Dadurch kann eine weitere Flexibilität hinsichtlich des Einsatzes der Erfindung erreicht werden. Besonders bei kleinen Drehzahlen des Läufers der wenigstens einen Synchronmaschine kann auf diese Weise eine große Bremsleistung beziehungsweise ein großes Bremsmoment zuverlässig erreicht werden.

Ergänzend kann vorgesehen sein, dass das Zwischenkreispotential abhängig von einer momentanen Phasenlage der Phasenwechselströme ausgewählt wird. So kann vorgesehen sein, dass dasjenige der Zwischenkreispotentiale ausgewählt wird, bei welchem die wenigsten der Schaltelemente der Reihenschaltungen aktiv eingeschaltet werden müssen. Natürlich können auch weitere Kriterien herangezogen werden, um das geeignet Zwischenkreispotential auszuwählen. Es kann ferner vorgesehen sein, dass das geeignete Zwischenkreispotential bedarfsweise gewechselt wird, um vorgegebenen Randbedingungen besonders günstig realisieren zu können. Das Wechseln kann davon abhängig sein, wie momentane Phasenlagen der Phasenwechselströme sich ändern.

Gemäß einer Weiterbildung wird vorgeschlagen, dass die vorgegebene Phasendifferenz abhängig von einer momentanen Zwischenkreisspannung des Gleichspannungszwischenkreises ermittelt wird. Dies kann berücksichtigen, dass die Zwischenkreisgleichspannung für die Bereitstellung einer vorgegebenen Bremsleistung beziehungsweise einen entsprechend zugeordneten Spannungswert aufweisen sollte. Um dies erreichen zu können, kann ein Wert für die Zwischenkreisspannung vorgegeben sein. Darüber hinaus kann der Wert der Zwischenkreisgleichspannung natürlich auch davon abhängig sein, auf welche Weise die Widerstandseinheit zum Umsetzen der zugeführten elektrischen Energie in Wärme mit einer elektrischen Spannung zu beaufschlagen ist. Diese Weiterbildung kann natürlich auch in Kombination mit den voranstehend beschriebenen Ausgestaltungen kombiniert sein.

Weiterhin wird vorgeschlagen, dass die Taktrate entsprechend der Frequenz der Phasenwechselströme eingestellt wird. In diesem Fall hat die Taktrate also etwa die gleiche Frequenz wie die Phasenwechselströme. Vorzugsweise wird die Taktrate während des Abbremsens entsprechend der aktuellen beziehungsweise momentanen Frequenz der Phasenwechselströme eingestellt. Hierdurch können Änderungen der Drehzahl des Läufers der wenigstens einen Synchronmaschine auf einfache Weise berücksichtigt werden.

Bezüglich des Abbremsens des Fahrzeugs wird insbesondere vorgeschlagen, dass die Phasendifferenz ferner abhängig von einer aktuellen Drehzahl der Synchronmaschine vorgegeben wird. Dies kann berücksichtigen, dass die Phasendifferenz, die dazu führt, eine vorgegebene Bremsleistung beziehungsweise ein vorgegebenes Bremsmoment einstellen zu können, davon abhängig sein kann, mit welcher Drehzahl der Läufer der wenigstens einen Synchronmaschine aktuell beziehungsweise momentan betrieben wird. Hierdurch können spezifische Eigenschaften der wenigstens einen Synchronmaschine und/oder auch Eigenschaften eines maximal momentan möglichen Bremsmoments berücksichtigt werden. Beispielsweise kann berücksichtigt werden, dass das maximal mögliche Bremsmoment von einer Geschwindigkeit des Fahrzeugs abhängig sein kann. Insgesamt kann die Flexibilität und die Zuverlässigkeit weiter verbessert werden.

Darüber hinaus wird vorgeschlagen, dass die vorgegebene Bremsleistung abhängig von einer maximal möglichen momentanen Bremsleistung ermittelt wird. Diese Ausgestaltung ermöglicht es, eine Anti-Schlupf-Regelung zu realisieren, um einen möglichst kurzen Bremsweg beim Abbremsen des Fahrzeugs erreichen zu können. Darüber hinaus können auch weitere Randbedingungen beziehungsweise Aspekte zum Ermitteln der vorgegebenen Bremsleistung herangezogen werden. Beispielsweise können auch Aspekte bezüglich des Fahrzeugs selbst berücksichtigt werden, die ein Abbremsen mit einer maximal möglichen Bremsleistung beziehungsweise einem maximal möglichen Bremsmoment vorsehen, um beispielsweise eine Stabilität des Fahrzeugs während des Fahrbetriebs hinreichend zuverlässig zu gewährleisten, beispielsweise bei einer Kurvenfahrt, oder dergleichen.

Weitere Vorteile und Merkmale ergeben sich anhand der folgenden Beschreibung von Ausführungsbeispielen anhand der beigefügten Figuren. In den Figuren bezeichnen gleiche Bezugszeichen gleiche Merkmale und Funktionen.

Es zeigen:
- FIG 1: eine schematische reduzierte Schaltbildansicht einer Antriebseinrichtung eines elektrisch antreibbaren schienengebundenen Fahrzeugs;
- FIG 2: eine schematische Diagrammdarstellung von Phasenströmen und zugeordneten Phasenspannungen einer dreiphasigen Synchronmaschine an einem Wechselrichter gemäß FIG 1 in einem Bremsbetrieb;
- FIG 3: eine schematische Diagrammdarstellung wie FIG 2, bei der jedoch lediglich für eine einzige der Phasen der Synchronmaschine mittels Graphen dargestellt ist, wie zwischen einem Kurzschließen von Phasenanschlüssen der Synchronmaschine und einem Einspeisen von Energie in den Gleichspannungszwischenkreis gemäß FIG 1 gewechselt wird;
- FIG 4: eine schematische Diagrammdarstellung wie FIG 3 für eine einzelne Phase der Synchronmaschine gemäß FIG 1 beim Abbremsen, wobei mittels zeitlich synchronisiert überlagert dargestellter Spannungssignale für die Schaltelemente der zugeordneten Reihenschaltung des Wechselrichters eine Phasenverschiebung zwischen einem Phasenwechselstrom und einer zugeordneten Phasenwechselspannung dargestellt ist; und
- FIG 5: eine schematische Diagrammdarstellung für erreichbare Bremsmomente abhängig von einer Phasendifferenz wie gemäß FIG 4 erläutert.

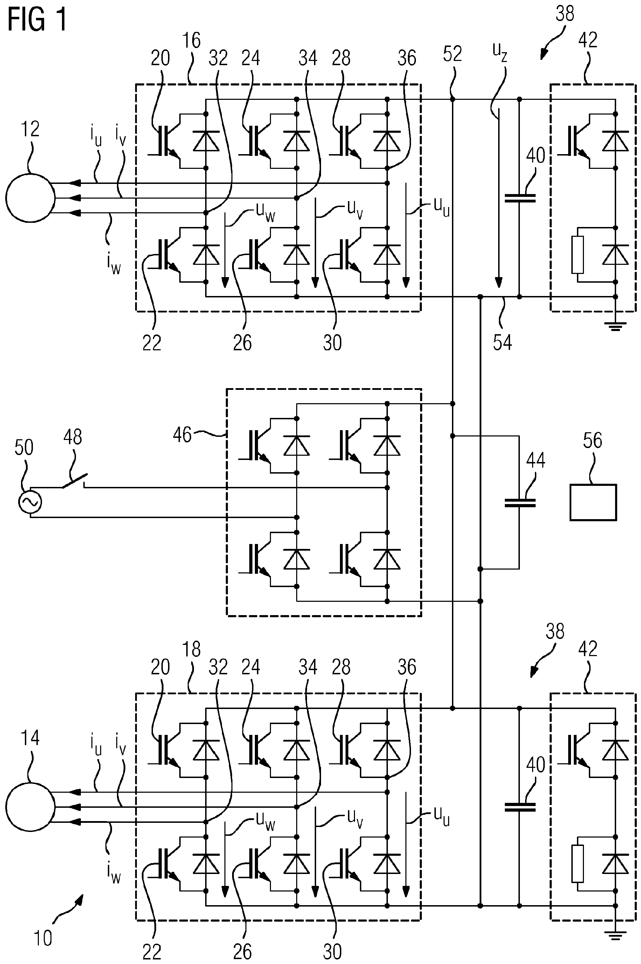

In FIG 1 zeigt in einer reduzierten schematischen Schaltbilddarstellung den Aufbau einer elektrischen Einrichtung eines nicht weiter dargestellten elektrisch antreibbaren schienengebundenen Fahrzeugs 10. Das Fahrzeug 10 umfasst vorliegend zwei dreiphasige Synchronmaschinen 12, 14, die zum Antreiben des Fahrzeugs 10 in einem Fahrbetrieb dienen. Zu diesem Zweck sind nicht dargestellte Läufer der Synchronmaschinen 12, 14 mit entsprechenden ebenfalls nicht dargestellten Antriebsachsen des Fahrzeugs 10 mechanisch gekoppelt.

Das Fahrzeug 10 umfasst ferner einen Gleichspannungszwischenkreis 38 sowie zwei an den Gleichspannungszwischenkreis 38 angeschlossene Wechselrichter 16, 18, wobei an dem Wechselrichter 16 die Synchronmaschine 12 und am Wechselrichter 18 die Synchronmaschine 14 angeschlossen ist. Jeder der Wechselrichter 16, 18 weist für jede der Phasen U1, V1, W1 der Synchronmaschinen 12, 14 eine jeweilige Reihenschaltung aus Schaltelementen 20, 22, 24, 26, 28, 30 auf, die dem Anschließen der jeweiligen Phasen U1, V1, W1 der jeweiligen Synchronmaschine 12, 14 an jeweiligen Mittelanabgriffe 32, 34, 36 der Reihenschaltungen dient. Die Synchronmaschinen 12, 14 sind hierdurch mit dem Gleichspannungszwischenkreis 38 elektrisch gekoppelt.

Der Gleichspannungszwischenkreis 38 ist mit einer Zwischenkreisgleichspannung u_{z} beaufschlagt, die elektrische Zwischenkreispotentiale 52, 54 umfasst.

Am Gleichspannungszwischenkreis 38 sind ferner zwei elektrische Widerstandseinheiten 42 angeschlossen, die ausgebildet sind, beim Abbremsen des Fahrzeugs 10 mittels der Synchronmaschinen 12, 14 von diesen dem Gleichspannungszwischenkreis 38 zugeführte elektrische Energie in Wärme umzuwandeln. Die Widerstandseinheiten 42 können einen elektrischen Widerstand aufweisen, der hinsichtlich seiner Leistungsfähigkeit entsprechend ausgebildet ist und mittels eines nicht weiter bezeichneten Schaltelements bedarfsgerecht mit dem Gleichspannungszwischenkreis elektrisch gekoppelt werden kann, um die eine Leistungsaufnahme zu steuern. In FIG 1 ist das Schaltelement durch einen nicht bezeichneten IGBT gebildet, der durch einen im Folgenden noch beschriebenen Taktgeber 56 in geeigneter Weise im Schaltbetrieb betrieben wird. Zum Widerstand der Widerstandseinheit 42 ist ferner unmittelbar eine Inversdiode parallelgeschaltet, die dazu dient, einen Freilaufpfad bereitzustellen, um die Wirkung parasitärer Induktivitäten oder dergleichen kompensieren zu können.

Der Gleichspannungszwischenkreis 38 umfasst ferner zwei Zwischenkreiskondensatoren 40, die den Betrieb der Wechselrichter 16, 18 unterstützen und gegebenenfalls auch für weitere unterstützende Funktionalitäten ausgelegt sein können.

Das Fahrzeug 10 umfasst weiterhin den Taktgeber 56, der dem Betreiben der Schaltelemente 20, 22, 24, 26, 28, 30 des jeweiligen der Wechselrichter 16, 18 dient. Der Taktgeber 56 ist ausgebildet, die Schaltelemente 20, 22, 24, 26, 28, 30 während eines bestimmungsgemäßen Fahrbetriebs mittels entsprechender Schaltsignale zu steuern. Für den bestimmungsgemäßen Fahrbetrieb ist dabei eine Taktrate für die Schaltsignale deutlich größer als eine Frequenz der Phasenströme der beiden Synchronmaschinen 12, 14. Die Taktrate kann hierbei zum Beispiel größer als etwa 5 kHz, beispielsweise etwa 10 kHz betragen.

Das Abbremsen des Fahrzeugs 10 ist hier nicht dem bestimmungsgemäßen Fahrbetrieb zuzurechnen. Das Abbremsen bezieht sich vorliegend insbesondere auf ein Schnellbremsen beziehungsweise ein Notbremsen. Zum Abbremsen des Fahrzeugs 10 mittels der Synchronmaschinen 12, 14 wird mittels des Taktgebers 56 eine Taktrate zum Betreiben der Schaltelemente 20, 22, 24, 26, 28, 30 abhängig von einer Frequenz von durch die Synchronmaschinen 12, 14 bereitgestellten Phasenwechselströmen iᵤ, iᵥ, i_{w} eingestellt, um die von den Synchronmaschinen 12, 14 bereitgestellte elektrische Energie zumindest teilweise dem Gleichspannungszwischenkreis 38 und infolgedessen auch der Widerstandseinheit 42 zuzuführen. Diese Taktrate entspricht vorliegend der Frequenz der Phasenwechselströme iᵤ, iᵥ, i_{w} und kann zum Beispiel in einem Frequenzbereich von etwa kleiner als 500 Hz sein.

Der Taktgeber 56 dient somit unter anderem dem Betrieb der Schaltelemente 20, 22, 24, 26, 28, 30 der Wechselrichter 16, 18. Wie im Folgenden noch weiter erläutert werden wird, ist der Taktgeber 56 ausgebildet, Nullstellen der Phasenwechselströme iᵤ, iᵥ, i_{w} zu ermitteln und die Schaltelemente 20, 22, 24, 26, 28, 30 derart zu betreiben, dass zwischen dem jeweiligen der Phasenwechselströme iᵤ, iᵥ, i_{w} und einer jeweils zugeordneten Phasenwechselspannung u_{u,} uᵥ, u_{w} eine vorgegebene Phasendifferenz eingestellt ist. Darüber hinaus ist der Taktgeber 56 ausgebildet, die Phasendifferenz zwischen dem jeweiligen der Phasenwechselströme iᵤ, iᵥ, i_{w} und der jeweils zugeordneten Phasenwechselspannung uᵤ, uᵥ, u_{w} abhängig von einer vorgebbaren Bremsleistung beziehungsweise einem vorgebbaren Bremsmoment einzustellen. Die Phasenwechselspannungen uᵤ, uᵥ, u_{w} sind vorliegend auf das Zwischenkreispotential 54 bezogen erfasst. Für die Darstellung der Erfindung kommt es hierbei jedoch nicht auf ein bestimmtes Bezugspotential für die Phasenwechselspannungen uᵤ, uᵥ, u_{w} an.

Die vorgebbare Bremsleistung beziehungsweise das vorgebbare Bremsmoment wird von einer übergeordneten Fahrzeugsteuerung des Fahrzeugs 10 bereitgestellt, die vorliegend in den FIG nicht dargestellt ist. Die Fahrzeugsteuerung des Fahrzeugs 10 dient insbesondere zum Führen beziehungsweise Betreiben des Fahrzeugs 10 in einem bestimmungsgemäßen Fahrbetrieb. Der bestimmungsgemäße Fahrbetrieb umfasst vorliegend zumindest ein Beschleunigen, ein Bremsen, ein Führen des Fahrzeugs 10 bei einer vorgegebenen Geschwindigkeit oder dergleichen.

Um mittels der Synchronmaschinen 12, 14 ein Abbremsen für einen Schnellbremsfall beziehungsweise einen Notbremsfall realisieren zu können, ist es vorgesehen, dass die Bremsleistung von der übergeordneten Fahrzeugsteuerung entsprechend bereitgestellt wird. Dabei wird die Bremsleistung derart bereitgestellt, dass eine momentan maximal mögliche Bremsleistung als vorgegebene Bremsleistung bereitgestellt wird. Diese maximal mögliche momentane Bremsleistung kann zeitlich variieren und zum Beispiel von einer Geschwindigkeit des Fahrzeugs 10, Wetterverhältnissen bezüglich eines Fahrwegs und/oder dergleichen abhängig sein. Die maximal mögliche momentane Bremsleistung ist somit in der vorliegenden Ausgestaltung davon abhängig, dass ein möglichst kurzer Bremsweg erreicht werden kann, zu welchem Zweck die übergeordnete Fahrzeugsteuerung auch eine Anti-Schlupf-Regelung umfasst. Abhängig von dieser wird die maximale mögliche momentane Bremsleistung ermittelt.

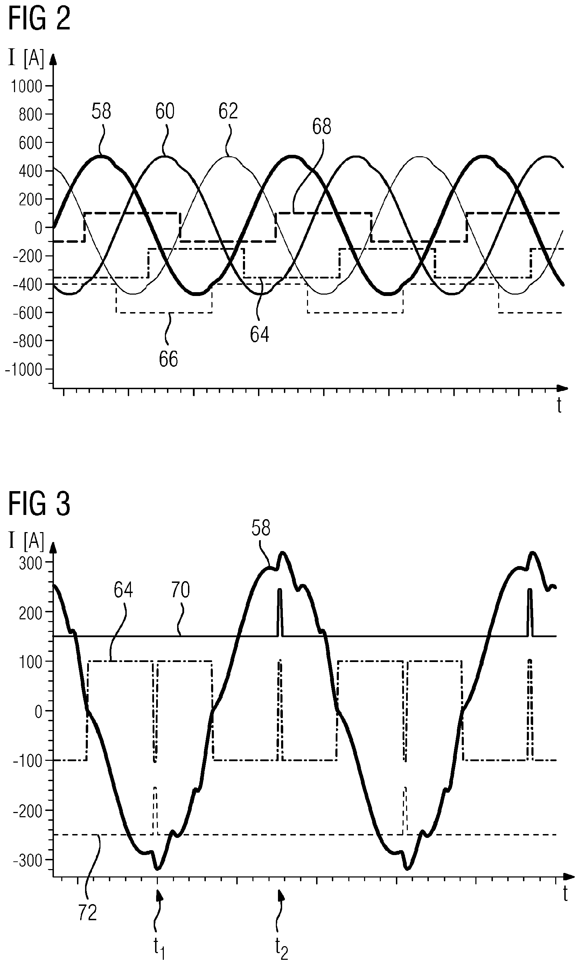

Im bestimmungsgemäßen Fahrbetrieb werden die Schaltelemente 20, 22, 24, 26, 28, 30 mittels des Taktgebers 56 in geeigneter Weise gesteuert, sodass die gewünschte Funktionalität bezüglich des Führens des Fahrzeugs realisiert werden kann. Ist hingegen ein Abbremsen des Fahrzeugs 10 vorgesehen, wird die Taktrate zum Betreiben der Schaltelemente 20, 22, 24, 26, 28, 30 entsprechend der Frequenz der durch die Synchronmaschinen 12, 14 bereitgestellten Phasenwechselströme iᵤ, iᵥ, i_{w} eingestellt, das heißt, abweichend von einer Einstellung beim bestimmungsgemäßen Fahrbetrieb verändert. Dies ist anhand von FIG 2 ersichtlich, welche eine schematische Diagrammdarstellung zeigt, in der mittels Graphen 58, 60, 62 die Phasenströme iᵤ, iᵥ, i_{w} dargestellt sind, wobei die Phasenströme iᵤ, iᵥ, i_{w} den Graphen entsprechend zugeordnet sind. Eine Ordinate des Diagramms gemäß FIG 2 ist somit einem Strom in Ampere zugeordnet, wohingegen eine Abszisse des Diagramms der Zeit in Sekunden zugeordnet ist. In der Darstellung in FIG 2 beträgt die Frequenz der Phasenwechselströme iᵤ, iᵥ, i_{w} etwa 285 Hz.

Aus FIG 1 ist ferner ersichtlich, dass der Gleichspannungszwischenkreis 38 mit einem Netzwechselrichter 46 elektrisch gekoppelt ist, der hier nicht weiter erläutert wird. Dem Netzwechselrichter 46 ist ein Zwischenkreiskondensator 44 zugeordnet. Der Netzwechselrichter 46 stellt eine energietechnische Kopplung zu einer Wechselspannungsquelle 50 als Energiequelle für den bestimmungsgemäßen Fahrbetrieb her. Die Wechselspannungsquelle 50 ist über ein Schütz 48 mit dem Netzwechselrichter 46 elektrisch gekoppelt. Während des bestimmungsgemäßen Fahrbetriebs ist das Schütz 48 im eingeschalteten Schaltzustand, sodass zwischen dem Gleichspannungszwischenkreis 38 und der Wechselspannungsquelle 50 elektrische Energie ausgetauscht werden kann. Während des Abbremsens des Fahrzeugs 10 ist das Schütz 48 jedoch im ausgeschalteten Schaltzustand. Der ausgeschaltete Schaltzustand kann auch dann für das Schütz 48 vorgesehen sein, wenn das Fahrzeug 10 außerhalb des bestimmungsgemäßen Fahrbetriebs ist, beispielsweise in einem abgestellten Zustand oder dergleichen.

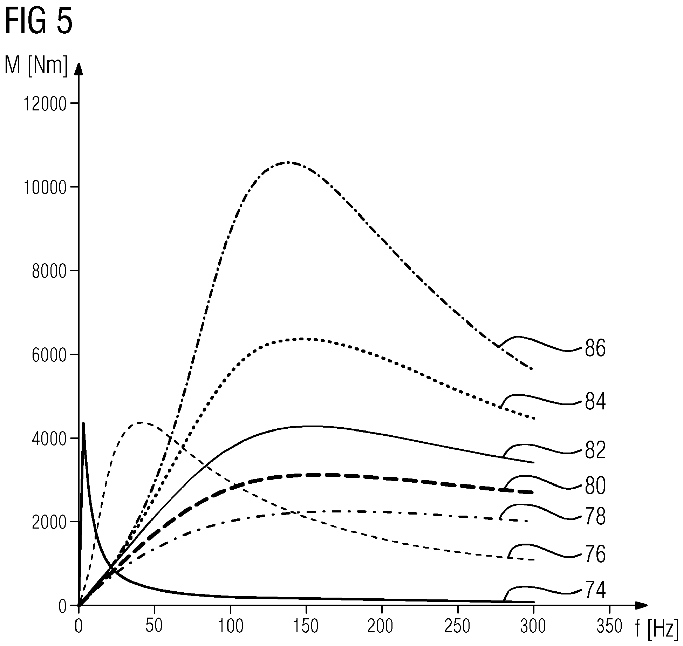

In FIG 2 sind ferner mit Graphen 64, 66, 68 entsprechende Phasenspannungen uᵤ, uᵥ, u_{w} dargestellt, die hier jedoch lediglich schematisch überlagert und versetzt zueinander dargestellt sind, um die zeitliche Lage zueinander in einem Diagramm visualisieren zu können. Die Amplituden der Spannungen sind in FIG 2 also nicht maßstabsgerecht dargestellt. Wie aus FIG 2 anhand der Graphen 58 bis 68 ersichtlich ist, sind die Phasenströme iᵤ, iᵥ, i_{w} und die entsprechenden zugeordneten Phasenspannungen uᵤ, uᵥ, u_{w} zeitlich synchron zueinander, sodass eine Phasenverschiebung zwischen den Phasenströmen und den zugeordneten Phasenspannungen etwa null ist. Bei diesem Betriebsfall wird die von den Synchronmaschinen 12, 14 bereitgestellte elektrische Energie mittels der Wechselrichter 16, 18 lediglich gleichgerichtet dem Gleichspannungszwischenkreis 38 zugeführt, sodass diese Energie mittels der Widerstandseinheiten 42 in Wärme umgewandelt werden kann. Wie sich anhand von FIG 5 noch zeigen wird, ist die hierdurch erreichbare Bremswirkung jedoch begrenzt, sodass sie sich in der Regel nicht für den Schnellbremsfall beziehungsweise den Notbremsfall eignet.

Die Phasenspannungen uᵤ, uᵥ, u_{w} stehen an Mittelabgriffen 32, 34, 36 der Reihenschaltungen der Wechselrichter 16, 18 zur Verfügung und können mittels geeigneter Spannungssensoren erfasst werden. Die Spannungssensoren können von den Wechselrichtern 16, 18 umfasst sein. Entsprechende Sensorsignale werden vorliegend an den Taktgeber 56 übermittelt.

FIG 3 zeigt in einer schematischen Diagrammdarstellung wie FIG 2 eine Weiterbildung der Steuerungsmöglichkeit bezüglich des Bremsens des Fahrzeugs 10 für eine einzelne der Phasen, nämlich der Phase U1. Für die Phasen V1 und W1 gilt entsprechendes. Die Frequenz beträgt hier ebenfalls wiederum etwa 285 Hz. Zu erkennen ist anhand von FIG 3, dass im Bereich der maximalen Amplitude des Phasenstroms iᵤ zu einem Zeitpunkt t₁ ein kurzzeitiges Einschalten eines entsprechenden der Schaltelemente, nämlich des Schaltelements 22, erfolgt. Die entsprechende Phasenspannung uᵤ ist wieder mit dem Graphen 64 dargestellt, wobei der entsprechende Phasenstrom iᵤ mittels des Graphen 58 dargestellt ist. Die Phasenspannung uᵤ ist hinsichtlich ihrer Amplitude lediglich schematisch dargestellt.

Mittels Graphen 70, 72 sind entsprechende Steuersignale der Halbleiterschalter 20, 22 dargestellt, um ein jeweiliges Schalten aufzuzeigen. Die Graphen 70, 72 sind nicht maßstabsgetreu hinsichtlich der Ordinate in das Diagramm der FIG 2 eingetragen, um die zeitliche Zuordnung vereinfacht darzustellen. Zu erkennen ist, dass in einem Zeitbereich um den Zeitpunkt t₁, bei dem die Amplitude des Phasenstroms iᵤ ihren maximalen negativen Wert erreicht, das Schaltelement 22 für einen kurzen Augenblick eingeschaltet wird. Das entsprechende Schaltelement 20 bleibt hierbei ausgeschaltet. Für die positive maximale Amplitude des Phasenstroms iᵤ erfolgt entsprechendes in einem Zeitbereich um den Zeitpunkt t₂, bei dem, wie anhand des Graphen 70 dargestellt ist, das Schaltelement 20 für einen kurzen Zeitraum eingeschaltet wird. Hier verbleibt nun das Schaltelement 22 im ausgeschalteten Schaltzustand. Hierdurch kann gegenüber der Funktion gemäß FIG 2 erreicht werden, dass das gemäß FIG 2 dargestellte Abbremsen hinsichtlich der Bremswirkung variiert werden kann, indem die Bremswirkung reduziert werden kann. Dies eignet sich zwar für einen normalen Bremsbetrieb des Fahrzeugs 10, jedoch ist diese Funktionalität noch nicht ausreichend, um für das Schnellbremsen beziehungsweise das Notbremsen eingesetzt werden zu können.

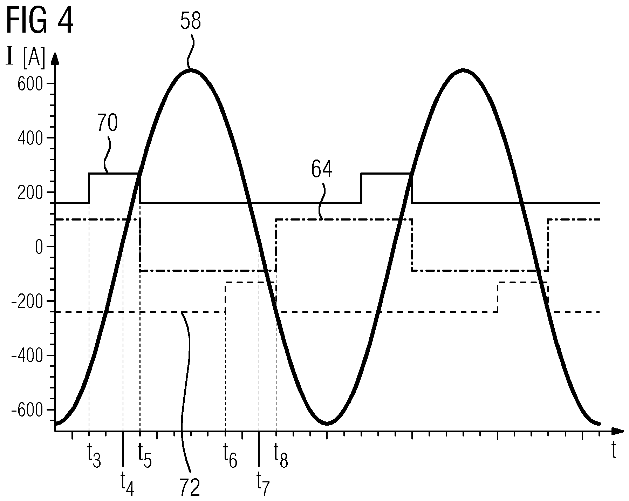

FIG 4 zeigt nun in einer schematischen Diagrammdarstellung wie FIG 3 für den in der FIG 3 dargestellten Fall, wie mittels Einstellen einer Phasendifferenz zwischen den Phasenwechselströmen iᵤ, iᵥ, i_{w} und den zugeordneten Phasenspannungen uᵤ, uᵥ, u_{w} eine verstärkte Bremswirkung erreicht werden kann. In FIG 4 ist die Situation für eine nacheilende Phasenspannung dargestellt, die zu einer Vergrößerung der Bremsleistung gegenüber den zuvor anhand der FIG 2 und 3 erläuterten Situationen beschreibt.

Zu erkennen ist, dass die Graphen 70 und 72 entsprechende Steuersignale für die Schaltelemente 20, 22 darstellen. Dabei werden nunmehr zunächst mittels des Taktgebers 56 Nullstellen des Phasenstroms iᵤ ermittelt, zu welchem Zweck der Taktgeber 56 eine entsprechende Auswerteeinheit aufweist, die an nicht dargestellte Stromsensoren angeschlossen sind. Aus den ermittelten Nullstellen des Phasenstroms iᵤ werden dann Schaltzeitpunkte t₃ und t₅ ermittelt, die einen Schaltzeitraum für einen eingeschalteten Schaltzustand des Schaltelements 20 repräsentieren. Der Schaltzeitraum umschließt einen Zeitpunkt t₄, zu dem der Phasenstrom iᵤ null ist.

Mit dem Ausschalten des Schaltelements 20 springt dann die mit dem Graphen 64 dargestellte Phasenspannung uᵤ von ihrem Maximalwert auf ihren Minimalwert. Der Zeitraum zwischen den Zeitpunkten t₄ und t₅ entspricht der Phasenverschiebung beziehungsweise Phasendifferenz zwischen dem Phasenstrom iᵤ und der zugeordneten Phasenspannung uᵤ. Diese Phasendifferenz ist vorliegend negativ, sodass eine vergrößerte Bremsleistung erreicht werden kann. Für die zweite Nullstelle des Phasenstroms iᵤ zum Zeitpunkt t₇ ist äquivalent ein Steuersignal für das Schaltelement 22 gemäß dem Graphen 72 dargestellt. In entsprechender Weise wird ein Einschaltzeitraum ermittelt, der durch die Zeitpunkte t₆ und t₈ gebildet ist. Eine Zeitdifferenz zwischen den Zeitpunkten t₈ und t₇ ist nunmehr wieder ein Maß für die Phasendifferenz. Die Phasendifferenz ist hier im Wesentlichen gleich groß zu der zuvor ermittelten Phasendifferenz bezüglich der Zeitpunkte t₄ und t₅.

Soll hingegen eine Reduzierung der Bremsleistung erreicht werden, kann die Phasenverschiebung entsprechend positiv gewählt werden. Insgesamt ist ersichtlich, dass eine einfache Steuerung der Bremsleistung und infolgedessen auch des Bremsmoments durch die Synchronmaschinen 12, 14 erreicht werden kann, sodass hiermit auch eine Betriebssicherheit erreicht werden kann.

Die Möglichkeiten des Einstellens des Bremsmoments entsprechend der Bremsleistung abhängig von der Phasenverschiebung werden im Folgenden anhand eines schematischen Diagramms gemäß FIG 5 erläutert. Die Ordinate des Diagramms in FIG 5 ist dem Bremsmoment M in Nm zugeordnet. Die Abszisse ist der Frequenz in Hz zugeordnet. Die Frequenz bezieht sich dabei auf die Frequenz der jeweiligen Phasenwechselströme iᵤ, iᵥ, i_{w}, wie sie momentan durch die Synchronmaschinen 12, 14 bereitgestellt werden. Diese Frequenz bestimmt auch die Taktrate der Schaltsignale für die Schaltelemente 20, 22, 24, 26, 28, 30.

Mittels Graphen 74 bis 86 sind beispielhaft ausgewählte Einstellmöglichkeiten dargestellt. Dabei entspricht der Graph 74 einem Bremsmoment, welches beim Kurzschließen der Phasen U1, V1, W1 der Synchronmaschinen 12, 14 erreicht werden kann. Zu erkennen ist, dass bereits bei einer Frequenz von etwa 20 Hz der Phasenwechselströme der Synchronmaschinen 12, 14 die Bremswirkung erheblich nachlässt.

Mit dem Graphen 82 ist ein Widerstandsbremsen dargestellt, welches dadurch erreicht werden kann, dass die durch die Synchronmaschinen 12, 14 bereitgestellte Energie dem Zwischenkreis 38 zugeführt wird und durch die Widerstandseinheiten 42 in Wärme umgewandelt wird. In diesem Fall werden die Wechselrichter 16, 18 lediglich als Gleichrichter betrieben.

Mit dem Graphen 76 ist ein Verlauf für eine Bremswirkung dargestellt, die dadurch erreicht werden kann, dass zwischen dem Widerstandsbremsen gemäß dem Graphen 82 und dem Kurzschließen der Phasen U1, V1, W1 gemäß dem Graphen 74 gewechselt wird, indem durch Takten zwischen diesen Betriebsmodi gewechselt wird. Ein Tastverhältnis beträgt hier etwa 50%. Mit dem Graphen 76 ist also ein frequenzabhängiger Verlauf eines Bremsmoments dargestellt, bei dem zwischen den Funktionen gemäß der Graphen 74, 82 mit etwa 50 Prozent getaktet wird. Zu erkennen ist jedoch, dass das maximal mögliche Bremsmoment bei Betrieb gemäß der Graphen 74, 76 und 82 jedoch immer etwa gleich groß ist. Für den Schnellbremsfall beziehungsweise den Notbremsfall ist dies in der Regel jedoch nicht ausreichend.

Mit den Graphen 78 und 80 sowie 84 und 86 sind erreichbare Bremsmomente dargestellt, die durch Einstellen von Phasenverschiebungen erreicht werden können. Zu diesem Zweck wird das anhand von FIG 4 erläuterte Steuerungsverfahren durch den Taktgeber 56 genutzt.

Die Graphen 78, 80, 84 und 86 beziehen sich auf Bremsmomentverläufe, die mittels des Steuerungsverfahrens gemäß FIG 4 erreicht werden können. Dabei zeigt der Graph 78 einen Verlauf für eine Phasenverschiebung von +30°. Der Graph 80 bezieht sich auf eine Phasenverschiebung von +15°. Der Graph 84 bezieht sich auf eine Phasenverschiebung von -15°. Der Graph 86 bezieht sich auf eine Phasenverschiebung von -30°. Zu erkennen ist, dass gemäß dem erfindungsgemäßen Steuerungskonzept die maximale Bremswirkung beziehungsweise das maximale Bremsmoment abhängig von der Phasenverschiebung sehr flexibel eingestellt werden kann. Dadurch kann das Verfahren der Erfindung auch für das Schnellbremsen beziehungsweise für das Notbremsen eingesetzt werden. Dagegen ergibt sich anhand der Graphen 74, 76 und 82, dass das maximale Bremsmoment im Wesentlichen nicht beeinflusst werden kann.

Zugleich erlaubt es die Erfindung, die Bremsmomente durch ein besonders einfaches Steuerungskonzept einstellen zu können, sodass auch die Anforderungen hinsichtlich der Betriebssicherheit im Schnellbremsfall beziehungsweise im Notbremsfall zuverlässig erreicht werden können. Insgesamt zeigen die Ausführungsbeispiele wie mit einfachen Mitteln eine flexible Einstellung der Bremsleistung beziehungsweise des Bremsmoments erreicht werden kann, insbesondere eine hohe Bremswirkung eingestellt werden kann. Dabei kann auf vorhandene Einrichtungen des Fahrzeugs 10 zurückgegriffen werden, sodass die Erfindung auch auf einfache Weise in bereits bestehende Fahrzeuge nachträglich integriert werden kann.

Die Ausführungsbeispiele dienen ausschließlich der Erläuterung der Erfindung und sollen diese nicht beschränken.

## Patentansprüche

1. Verfahren zum Betreiben von Schaltelementen (20,22,24,26, 28,30) eines Wechselrichters (16,18) eines mittels wenigstens einer zumindest dreiphasigen Synchronmaschine (12,14) angetriebenen, insbesondere schienengebundenen Fahrzeugs (10), bei dem der Wechselrichter (16,18) für jede der Phasen (U1, V1,W1) der Synchronmaschine (12,14) wenigstens eine Reihenschaltung aus den Schaltelementen (20,22,24,26,28,30) aufweist, um die Synchronmaschine (12, 14) mit einem am Wechselrichter (16,18) angeschlossenen Gleichspannungszwischenkreis (38) elektrisch zu koppeln, wobei bei einem Abbremsen des Fahrzeugs (10) mittels der Synchronmaschine (12,14) eine Taktrate zum Betreiben der Schaltelemente (20,22,24,26,28, 30) abhängig von einer Frequenz von jeweiligen durch die Synchronmaschine (12,14) bereitgestellten Phasenwechselströmen (iᵤ, iᵥ, i_{w}) eingestellt wird, sodass von der Synchronmaschine (12,14) bereitgestellte elektrische Energie zumindest teilweise dem Gleichspannungszwischenkreis (38) zugeführt wird, **dadurch gekennzeichnet, dass** Nullstellen der Phasenwechselströme (iᵤ,iᵥ,i_{w}) ermittelt werden und die Schaltelemente (20,22,24,26,28,30) derart betrieben werden, dass zwischen dem jeweiligen der Phasenwechselströme (iᵤ,iᵥ,i_{w}) und einer jeweils zugeordneten Phasenwechselspannung (uᵤ,uᵥ,u_{w}) eine vorgegebene Phasendifferenz eingestellt wird.

2. Verfahren nach Anspruch 1, **dadurch gekennzeichnet, dass** zumindest zeitweise nur die mit einem jeweiligen von zwei Zwischenkreispotentialen (52, 4) des Gleichspannungszwischenkreises (38) unmittelbar gekoppelten Schaltelemente (20,22,24,26,28,30) aktiviert werden.

3. Verfahren nach Anspruch 2, **dadurch gekennzeichnet, dass** das Zwischenkreispotential (52,54) abhängig von einer momentanen Phasenlage der Phasenwechselströme (iᵤ,iᵥ,i_{w}) ausgewählt wird.

4. Verfahren nach einem der vorhergehenden Ansprüche, **da- durch gekennzeichnet**, dass die vorgegebene Phasendifferenz abhängig von einer momentanen Zwischenkreisspannung (u_{z}) des Gleichspannungszwischenkreises (38) ermittelt wird.

5. Verfahren nach einem der vorhergehenden Ansprüche, **dadurch gekennzeichnet, dass** die Taktrate entsprechend der Frequenz der Phasenwechselströme (iᵤ,iᵥ,i_{w}) eingestellt wird.

6. Verfahren zum Abbremsen eines mittels wenigstens einer zumindest dreiphasigen Synchronmaschine (12,14) angetriebenen, insbesondere schienengebundenen Fahrzeugs (10), bei dem die Synchronmaschine (12,14) über einen für jede der Phasen (U1, V1,W1) der Synchronmaschine (12,14) wenigstens eine Reihenschaltung aus den Schaltelementen (20,22,24,26,28,30) aufweisenden Wechselrichter (16,18) einem an den Wechselrichter (16,18) angeschlossenen Gleichspannungszwischenkreis (38) elektrisch gekoppelt wird, mit den Schritten:
- Vorgeben einer Bremsleistung zum Abbremsen des Fahrzeugs (10),
- Einstellen einer Taktrate zum Betreiben der Schaltelemente (20,22,24,26,28,30) abhängig von einer Frequenz von jeweiligen durch die Synchronmaschine (12,14) bereitgestellten Phasenwechselströmen (iᵤ,iᵥ,i_{w}) beim Abbremsen des Fahrzeugs (10) mittels der Synchronmaschine (12,14), sodass von der Synchronmaschine (12,14) bereitgestellte elektrische Energie dem Gleichspannungszwischenkreis (38) zugeführt wird, und
- Umwandeln von der beim Abbremsen mittels der Synchronmaschine (12,14) von dieser dem Gleichspannungszwischenkreis (38) zugeführten elektrischen Energie in Wärme mittels einer am Gleichspannungszwischenkreis (38) angeschlossenen elektrischen Widerstandseinheit (42),
**dadurch gekennzeichnet, dass** die Schaltelemente (20,22,24,26,28,30) gemäß einem Verfahren nach einem der vorhergehenden Ansprüche betrieben werden, wobei eine Phasendifferenz zwischen dem jeweiligen der Phasenwechselströme (iᵤ,iᵥ,i_{w}) und einer jeweils zugeordneten Phasenwechselspannung (uᵤ,uᵥ,u_{w}) abhängig von der Bremsleistung eingestellt wird.

7. Verfahren nach Anspruch 6, **dadurch gekennzeichnet, dass** die Phasendifferenz ferner abhängig von einer aktuellen Drehzahl der Synchronmaschine (12,14) vorgegeben wird.

8. Verfahren nach Anspruch 7, **dadurch gekennzeichnet, dass** die vorgegebene Bremsleistung abhängig von einer maximal möglichen momentanen Bremsleistung ermittelt wird.

9. Taktgeber (56) zum Betreiben von Schaltelementen (20,22, 24,26,28,30) eines Wechselrichters (16,18) eines mittels wenigstens einer zumindest dreiphasigen Synchronmaschine (12, 14) antreibbaren, insbesondere schienengebundenen Fahrzeugs (10), bei dem der Wechselrichter (16,18) für jede der Phasen (U1,V1,W1) der wenigstens einen Synchronmaschine (12,14) wenigstens eine Reihenschaltung aus den Schaltelementen (20, 22,24,26,28,30) aufweist, um die wenigstens eine Synchronmaschine (12,14) mit einem am Wechselrichter (16,18) angeschlossenen Gleichspannungszwischenkreis (38) elektrisch zu koppeln, wobei der Taktgeber (56) ausgebildet ist, bei einem Abbremsen des Fahrzeugs (10) mittels der Synchronmaschine (12,14) eine Taktrate zum Betreiben der Schaltelemente (20, 22,24,26,28,30) abhängig von einer Frequenz von jeweiligen durch die Synchronmaschine (12,14) bereitgestellten Phasenwechselströmen (iᵤ,iᵥ,i_{w}) einzustellen, um von der Synchronmaschine (12,14) bereitgestellte elektrische Energie zumindest teilweise dem Gleichspannungszwischenkreis (38) zuzuführen, **dadurch gekennzeichnet, dass** der Taktgeber (56) ausgebildet ist, Nullstellen der Phasenwechselströme (iᵤ,iᵥ,i_{w}) zu ermitteln und die Schaltelemente (20,22,24,26,28,30) derart zu betreiben, dass zwischen dem jeweiligen der Phasenwechselströme (iᵤ,iᵥ,i_{w}) und einer jeweils zugeordneten Phasenwechselspannung (uᵤ,uᵥ,u_{w}) eine vorgegebene Phasendifferenz eingestellt ist.

10. Elektrisch antreibbares, insbesondere schienengebundenes Fahrzeug (10) mit
- wenigstens einer zumindest dreiphasigen Synchronmaschine (12,14) zum Antreiben des Fahrzeugs (10) in einem Fahrbetrieb,
- wenigstens einem Gleichspannungszwischenkreis (38),
- wenigstens einem am wenigstens einen Gleichspannungszwischenkreis (38) angeschlossenen Wechselrichter (16,18), der für jede der Phasen (U1,V1,W1) der wenigstens einen Synchronmaschine (12,14) wenigstens eine Reihenschaltung aus Schaltelementen (20,22,24,26,28,30) zum Anschließen an eine jeweilige der Phasen (U1, V1, W1) der wenigstens einen Synchronmaschine (12,14) aufweist, um die wenigstens eine Synchronmaschine (12,14) mit dem wenigstens einen Gleichspannungszwischenkreis (38) elektrisch zu koppeln,
- wenigstens einer am wenigstens einen Gleichspannungszwischenkreis (38) angeschlossenen elektrischen Widerstandseinheit (42), die ausgebildet ist, zumindest bei einem Abbremsen des Fahrzeugs (10) mittels der Synchronmaschine (12,14) zumindest teilweise von dieser dem Gleichspannungszwischenkreis (38) zugeführte elektrische Energie in Wärme umzuwandeln, und
- einem Taktgeber (56) zum Betreiben der Schaltelemente (20, 22,24,26,28,30) des wenigstens einen Wechselrichters (16,18), wobei der Taktgeber (56) ausgebildet ist, zum Abbremsen des Fahrzeugs (10) mittels der wenigstens einen Synchronmaschine (12,14) eine Taktrate zum Betreiben der Schaltelemente (20,22,24,26,28,30) abhängig von einer Frequenz von jeweiligen durch die wenigstens eine Synchronmaschine (12,14) bereitgestellten Phasenwechselströmen (iᵤ,iᵥ,i_{w}) einzustellen, um die von der wenigstens einen Synchronmaschine (12,14) bereitgestellte elektrische Energie zumindest teilweise dem wenigstens einen Gleichspannungszwischenkreis (38) zuzuführen,
**dadurch gekennzeichnet, dass** der Taktgeber (56) gemäß Anspruch 9 ausgebildet ist und weiterhin ausgebildet ist, eine Phasendifferenz zwischen dem jeweiligen der Phasenwechselströme (iᵤ,iᵥ,i_{w}) und einer jeweils zugeordneten Phasenwechselspannung (uᵤ,uᵥ,u_{w}) abhängig von einer vorgebbaren Bremsleistung einzustellen.
